# EUROPEAN PATENT APPLICATION

(11) **EP 4 570 062 A1**
(43) Date of publication of application: **18.06.2025**
(21) Application number: 24216865.6
(22) Date of filing: 02.12.2024
(51) Int. Cl.: A01J 11/16, F04B 11/00, F16L 55/04, F16L 55/052

(54) **A DAMPER ARRANGEMENT, A HOMOGENIZER AND A METHOD FOR OPERATING THE DAMPER ARRANGEMENT**

(30) Priority: 11.12.2023 EP 23215573
(71) Applicant: Tetra Laval Holdings & Finance S.A., 1009 Pully (CH)
(72) Inventor: Leufstedt, Max, 22186 Lund (SE); Karlsson, Christer, 22186 Lund (SE)
(74) Representative: Tetra Pak - Patent Attorneys SE

(57) **Abstract**

A damper arrangement (100) for reducing pressure pulsations in a fluid line (102) filled with a liquid product The damper arrangement comprises: a vessel (104) having an inner chamber (116); an upper end valve (132) that connects an upper end (106) of the inner chamber to a gaseous media supply (135); a lower end valve (128) that connects a lower end (108) of the inner chamber to a liquid output (130); and a line connecting valve (126) that connects the lower end of the inner chamber to the fluid line. The upper end valve, the lower end valve and the line connecting valve are operable to drain the inner chamber from liquid product and form a pressure absorbing air pocket (109) inside the inner chamber. The vessel comprises a jacket (110) that has a fluid inlet (112) and a fluid outlet (114) for passing, via a heating media valve (142), a heating media through the jacket for sterilizing the inner chamber of the vessel.

## Description

### Technical Field

The invention generally relates to liquid food processing. More particularly, it is related to a damper arrangement for reducing pressure pulsations in a fluid line, a homogenizer arrangement equipped with such damper arrangement, and a method for operating the damper arrangement.

### Background

Today, it is well-known to use homogenizers in liquid food processing lines. In addition to reducing fat globules such that, by way of example, milk is made more homogenous, the homogenizers may also be used for providing a stable emulsion in case the liquid food product comprises oil and water, for achieving a desired texture and mouthfeel, and for achieving a stable product with consistent characteristics. In the food processing industry, it is commonly known to use so-called high pressure homogenizers. In short, this type of homogenizers comprises a piston pump arranged to increase a pressure of the food product, and a homogenizing device, sometimes referred to as homogenization valve, that comprises a gap through which the food product is pushed under high pressure, e.g. 200 bar. Due to that the piston pump is used for generating the pressure, pressure pulsations may be spread from the homogenizer to other parts of the line placed upstream and/or downstream the homogenizer. These pressure pulsations may cause various problems in other pieces of equipment in the line, which could result in breakdowns. To avoid this, it is known to use homogenizer dampers to absorb the pressure pulsations, sometimes also referred to as pressure variations or pressure shocks, both before and after the homogenizers.

The general principle of the homogenizer dampers is to use air cushions for absorbing the pressure pulsations. The air cushions are formed in that vertical pipes are mounted on an inlet pipe and an outlet pipe. By having upper ends of these vertical pipes closed, the air cushions can be formed inside these vertical pipes. During cleaning, it is common that the vertical pipes are dismounted and cleaned manually.

During recent years, so-called automatic dampers have been introduced. These dampers have an air re-fill mechanism providing for that air can be introduced into the upper ends of the vertical pipes such that the air cushions can be maintained over a longer period of time. In addition, it has also been provided solutions for automatic cleaning, often referred to as cleaning-in-place (ClP), such that the manual cleaning can be avoided.

Even though there are solutions today for automatic air re-fill as well as automatic cleaning, there is a need to further improve operation of the homogenizer dampers such that even more efficient food processing lines, that include homogenizers, can be provided.

### Summary

It is an object of the invention to at least partly overcome one or more of the above-identified limitations of the prior art. In particular, it is an object to provide improved cleaning of homogenizer dampers.

Generally, it has been realized that by having the homogenizer dampers, or more generally damper arrangements, formed by vessels arranged to provide air pockets, also referred to as air cushions, in their upper ends, and having the vessels provided with jackets, it is made possible to sterilize the vessels more efficiently during a cleaning process. By being able to sterilize the vessels, which may be embodied as vertical pipes, indirectly, the cleaning process of the homogenizer dampers can be made more efficient both in terms of time and energy usage. More particularly, by providing the heating media via the jacket instead of having hot water, which acts the heating media, provided inside the vertical pipes for sterilizing, more efficient sterilization can be achieved. Put differently, instead of cleaning the dampers by first flushing out food residues and thereafter sterilizing by feeding hot water through the dampers, as is the common approach used today when automatically cleaning homogenizer dampers, it is made possible to flush out the food residues and then sterilizing the vessels by feeding hot water or other heating media through the jackets.

According to a first aspect it is provided a damper arrangement for reducing pressure pulsations in a fluid line filled with a liquid product, the damper arrangement comprising a vessel having an inner chamber, an upper end valve that connects an upper end of the inner chamber to a gaseous media supply, a lower end valve that connects a lower end of the inner chamber to a liquid output, a line connecting valve that connects the lower end of the inner chamber to the fluid line, the upper end valve, the lower end valve and the line connecting valve being operable to drain the inner chamber from liquid product and form a pressure absorbing air pocket inside the inner chamber, wherein the vessel comprises a jacket that has a fluid inlet and a fluid outlet for passing, via a heating media valve, a heating media through the jacket for sterilizing the inner chamber of the vessel.

An advantage of having the vessel provided with the jacket is that the inner chamber of the vessel can be sterilized more efficiently after the inner chamber has been refilled with a gaseous media. Instead of feeding hot water or steam through the inner chamber, it is made possible by having the vessel provided with the jacket to indirectly sterilize the inner chamber, and this the refilled air, via the heating media provided in the jacket.

A temperature sensor may be arranged to measure a temperature of heating media leaving the jacket.

An advantage of having the temperature sensor is that steam and water may be distinguished from one another, which provides in turn for that these can be fed to different drains or in other ways be processed differently.

The damper arrangement may further comprise a control unit that is communicatively connected to the upper end valve, the lower end valve, the line connecting valve and the heating media valve, and configured to control:
the line connecting valve to close,
the upper end valve and the lower end valve to open, such that liquid product is drained from the inner chamber while gaseous media enters the inner chamber,
the upper end valve and the lower end valve to close,
the heating media valve to open, for passing a heating media through the jacket to sterilize the inner chamber and gaseous media that has entered the inner chamber, and
the line connecting valve to open, for fluidly connecting the liquid product in the fluid line with gaseous media in the inner chamber.

The jacket may be connected to a heating media source for receiving the heating media via the heating media valve, and connected to a cooling media source for receiving a cooling media via cooling media valve, such that the inner chamber can be cooled by cooling media from the cooling media source.

By being able to cool down the inner chamber quickly, a cleaning time can be reduced, which provides in turn for improved productivity.

The control unit may be communicatively connected to the cooling media valve, and configured to control, after opening the heating media valve,
the cooling media valve to open, for passing a cooling media through the jacket to cool the inner chamber.

The damper arrangement may further comprise a cleaning media valve arranged for passing a cleaning media through the inner chamber.

This comes with the positive effect that manual cleaning can be avoided.

The control unit may be communicatively connected to the cleaning media valve, and configured to control, before opening the heating media valve,
the cleaning media valve to open, for passing a cleaning media through the inner chamber to clean the inner chamber from liquid product.

The fluid line may be connected to the inlet of the jacket such that the heating media valve can be controlled to pass a heating media from the fluid line through the jacket.

By providing the heating media via the product line, existing pipes for supplying heating media may be used, which provides for improved cost efficiency.

The outlet of the jacket may be connected to the fluid line such that the heating can be returned to the fluid line from the jacket.

The damper arrangement may further comprise a sensor connected to the inner chamber and arranged to generate a signal indicative of a level of liquid that is present inside the chamber.

By using the level sensor, it is made possible to monitor the air pocket and if needed add air or other gas being used into the inner chamber.

According to a second aspect it is provided a homogenizer comprising
a damper arrangement according to the first aspect, and
a homogenizer configured to receive liquid product from the fluid line, wherein the homogenizer is arranged to operate at a pressure of at least 200 bar for homogenizing the liquid product, while simultaneously controlling the upper end valve, the lower end valve and the line connecting valve such that liquid product is drained from the inner chamber while gaseous media enters the inner chamber.

According to a third aspect it is provided a method of operating a damper arrangement according to the first aspect, the method comprising
closing the line connecting valve,
opening the upper end valve and the lower end valve, such that liquid product is drained from the inner chamber while gaseous media enters the inner chamber,
closing the upper end valve and the lower end valve,
opening the heating media valve for passing a heating media through the jacket to sterilize the inner chamber and gaseous media that has entered the inner chamber, and
opening the line connecting valve for fluidly connecting the liquid product in the fluid line with gaseous media in the inner chamber.

The features and advantages described above with reference to the first aspect also apply to this second aspect.

Still other objectives, features, aspects and advantages of the invention will appear from the following detailed description as well as from the drawings.

### Drawings

Embodiments of the invention will now be described, by way of example, with reference to the accompanying schematic drawings, in which
Fig. 1 is schematically illustrates of a damper arrangement.
Fig. 2 illustrates part of a food processing line comprising two inlet damper arrangements, a homogenizer and two outlet damper arrangements.
Fig. 3 is a flowchart illustrating a method for operating the damper arrangement.
Fig. 4 schematically illustrates an alternative configuration of the damper arrangement.

### Description

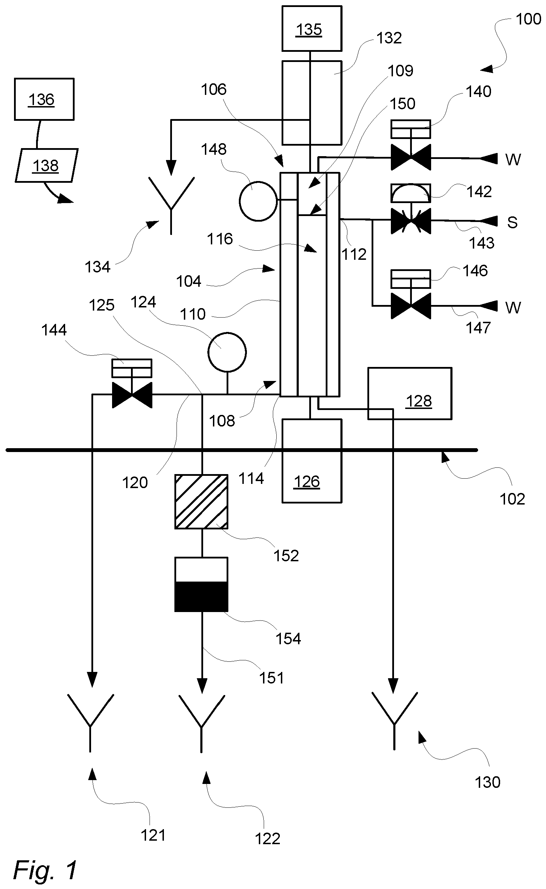

Fig. 1 schematically illustrates a damper arrangement 100 by way of example. A vessel 104, which may be a vertical pipe, also sometimes referred to as an upright tube, may be fluidly connected to a fluid line 102. The fluid line 102 may be a pipe arranged to feed a liquid food product to or from a homogenizer or other piece of equipment forming pressure pulsations. In an upper end 106 of the vessel 104, an air pocket 109 can be provided such that pressure pulsations can be absorbed. To provide for that there is a fluid connection between the fluid line 102 and the vessel 104, a lower end 108 of the vessel 104 can be connected to the fluid line 102 via a line connecting valve 126.

As illustrated, to sterilize the vessel 104, this is provided with a jacket 110. The jacket 110 can be provided with a fluid inlet 112 in an upper part of the jacket 110, and with a fluid outlet 114 in a lower end of the jacket 110. Inside the jacket 110, an inner chamber 116 of the vessel 104 is provided. In this inner chamber 116, the liquid food product is held in a lower part and air, or other gas feed into the inner chamber 116 to form the air pocket 109, is held in an upper part. When emptying the jacket 110, water can be fed from the fluid outlet 114 via a jacket outlet pipe 120 to a water jacket drain 121 and steam can be fed from the fluid outlet 114 via the jacket outlet pipe 120 to a steam jacket drain 122. As illustrated, the jacket outlet pipe 120 may be provided with a branch pipe for steam, herein referred to as a steam outlet pipe 151. To provide for that the steam is fed via the steam outlet pipe 151 to a steam jacket drain 122 and the water is fed via the jacket outlet pipe 120 to the water jacket drain 121, a temperature sensor 124 may be provided on the jacket outlet pipe 120 upstream a branch off position 125 of the jacket outlet pipe 120, and a sterilization media outlet valve 144 may be placed on the jacket outlet pipe 120 downstream the branch off position 125. By having the steam outlet pipe 151 divert from the jacket outlet pipe 120 in the branch off position 125 and having the sterilization media outlet valve 144 provided downstream this position and the temperature sensor 124 placed upstream, it is made possible by controlling the sterilization media outlet valve 144 based on input from the temperature sensor 124 to provide for that the water is fed into the water jacket drain 121 and the steam is fed into the steam jacket drain 122. The steam outlet pipe 151 can be provided with a condensate filter 152 and a steam trap 154.

Steam or other sterilization fluid can be provided through the fluid inlet 112 of the jacket 110 via a sterilization supply pipe 143 from a heating media source S, also sometimes referred to as a sterilization fluid supply. The sterilization supply pipe 143 may be provided with a heating media valve 142. In parallel with the sterilization supply pipe 143, a cooling water supply pipe 147 may be provided. This may be provided with a cooling media valve 146. As illustrated, the sterilization supply pipe 143 and the cooling water supply pipe 147 may converge such that both the sterilization fluid provided via the sterilization supply pipe 143 and the water provided via the cooling water supply pipe 147 can both be fed into the jacket 110 via the same fluid inlet 112.

In addition to being fluidly connected to the fluid line 102 via line connecting valve 126, a lower end of the inner chamber 116 may be connected to a liquid output 130, e.g. a drain, via a lower end valve 128. An upper end of the inner chamber 116 may be provided via an upper end valve 132 to a gaseous media supply 135 and a cleaning media drain 134 as illustrated. To provide for that adequate pressure pulsation absorption is provided via the air pocket 109, additional gas, such as air, may be provided via the gaseous media supply 135 via the upper end valve 132. In case atmospheric pressure is greater than a pressure in the air pocket 109, the gaseous media supply 135 may be atmosphere, that is, air may be provided from surrounding air, optionally via a filter or other arrangement for cleaning the air. To provide input for controlling the upper end valve 132, a level sensor 148 may be provided as illustrated. The level sensor 132 can be arranged for measuring an air level 150 inside the inner chamber 116. Since the air level 150 is defined by the interface between the air, or other gas being used, in the air pocket 109 and the food product held in the inner chamber 116, the level sensor 13 may determine the air level 150 by determining a food product level inside the inner chamber 116. During cleaning of the inner chamber 116, water of other cleaning media may be provided from a cooling media supply W, such as a water supply, or cleaning media supply, via an upper end of the inner chamber 116 via a pipe provided with a cleaning media valve 140.

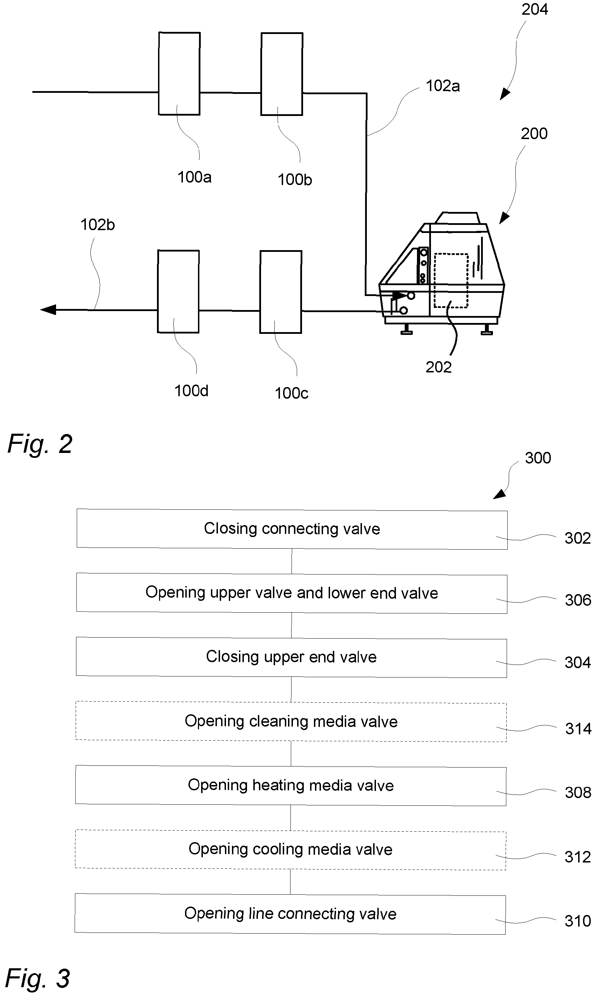

A control unit 136 may be provided. This may be communicatively connected to the upper end valve 132, the lower end valve 128, the line connecting valve 126 and/or the heating media valve 142. Operations of these may be controlled by that control data 138 is transmitted, via wire or wireless, to one or more of these valves. An example of how the damper arrangement 100 can be operated is described below with reference to fig. 3.

Fig. 2 illustrates a homogenizer arrangement 204 comprising a homogenizer 200, in turn comprising a piston pump 202, with a first and a second damper arrangement 100a, 100b on a product inlet pipe 102a, and a third and a fourth damper arrangement 100c, 100d on a product outlet pipe 102b. By having two arrangements both upstream and downstream the homogenizer 200, it is made possible to absorb pressure pulsations both upstream and downstream. Having two arrangements provide for that pressure pulsations absorption can be achieved even if one of the damper arrangements is being cleaned.

Fig. 3 is a flowchart illustrating a method 300 for operating the damper arrangement 100 by way of example. The method comprises closing 302 the line connecting valve 126, opening 304 the upper end valve 132 and the lower end valve 128 such that the liquid product is drained from the inner chamber 116 and the gaseous media, e.g. air, enters the inner chamber 116, closing 306 the upper end valve 132 and the lower end valve 128, opening 308 the heating media valve 142 for passing the heating media through the jacket 110 to sterilize the inner chamber 116 and gaseous media that has entered the inner chamber 116, and opening 310 the line connecting valve for fluidly connecting the liquid product in the fluid line 102 with gaseous media in the inner chamber 116.

Optionally, the method 300 may further comprise, after opening 308 the heating media valve, opening 312 the cooling media valve 146 for passing a cooling media through the jacket 110 to cool the inner chamber 116.

Optionally, the method 300 may further comprise, before opening 308 the heating media valve 142, opening 314 the cleaning media valve 146 for passing the cleaning media through the inner chamber 116 to clean the inner chamber 166 from the liquid product.

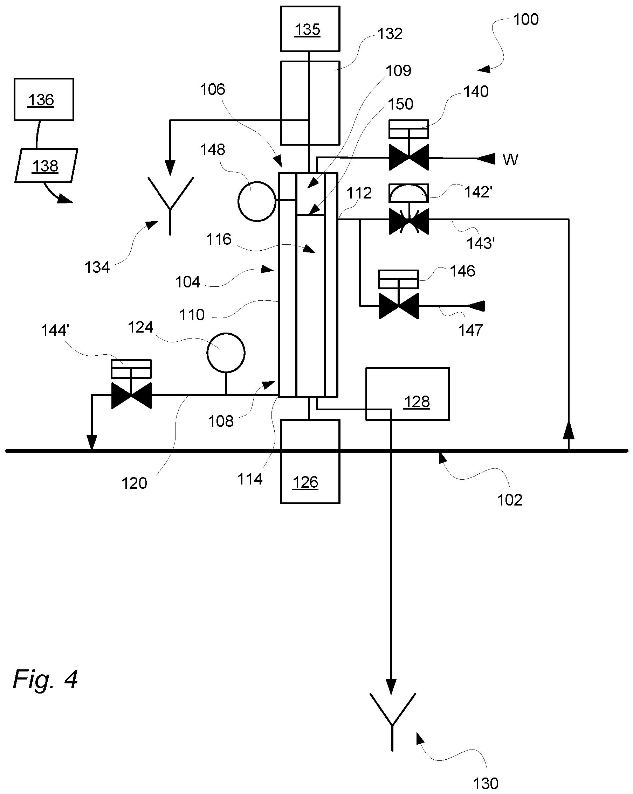

Fig. 4 illustrates an alternative configuration of the damper arrangement 100. Unlike the configuration illustrated in fig. 1, the jacket outlet pipe 120 is arranged to feed the heating media, such as the steam or water, from the jacket 110 into the product line 102. Put differently, by using this approach, the water jacket drain 121 and the steam jacket drain 122 can be left out. As an effect, the sterilization media outlet valve 144' in this configuration has the sole purpose of regulating to what extent the sterilization media is transferred to the product line 102 and not as in the example illustrated in fig. 1 to separate the water and the steam into different drains. In addition, the heating media may be transferred from the product line 102 to the jacket 110 through the sterilization supply pipe 143' and the heating media valve 142'. Since the heating media is received via the product line 102, the heating media source S, illustrated in fig. 1, can be left out. By using the approach illustrated in fig. 4, the jacket 110 can be sterilized together with the fluid line 102.

As an alternative to the description provided above, the damper arrangement may be described as follows:
A damper arrangement for reducing pulsations, or pressure changes from a piston pump, that may form part of a homogenizer, wherein the damper arrangement is placed on a fluid line connected to the piston pump, said arrangement comprising
an upright tube having an upper end and a lower end, wherein said tube is provided with a jacket,
a first lower end valve connected to the lower end of the tube and to the fluid line, which may be a product inlet pipe or a product outlet pipe,
a second lower end valve connected to the lower end of the tube and to a first drain,
an upper end valve connected to the upper end of the tube and to a second drain,
a water tube flush valve connected to the upper end and to a water supply,
a steam inlet valve connected to the jacket and to a steam supply,
a steam outlet valve connected to the jacket and to a jacket drain,
a water jacket flush valve connected to the jacket and to the jacket drain, and
a control unit communicatively connected to the valves, said control unit being configured to provide control data such that
in a damper cleaning-in-place (CIP) state:
   the first lower end valve and the upper end valve are opened such that CIP liquid, or cleaning agents, and water can flow through the fluid line, the first lower end valve, an inner space of the upright tube, the upper end valve into the second drain;
   in a damper drain state:
   the first lower end valve is closed and the second lower end valve and the upper end valve are opened such that the water provided into the inner space during the damper CIP state can be drained into the first drain;
   in a pre-sterilization state: the water tube flush valve and the second lower end valve are opened such that water can flow through the water tube flush valve, the inner space of the tube and the second lower end valve into the first drain;
   in a sterilization state: the first lower end valve, the second lower end valve, the upper end valve, the water tube flush valve and the water jacket flush valve are closed, and the steam inlet valve and the steam outlet valve are opened such that steam can be fed into the jacket via the steam inlet valve and be released from the jacket via the steam outlet valve, thereby heating air in the inner space of the tube;
   in a post-sterilization state: the water jacket flush valve and the steam outlet valve are opened such that the water can flow through the jacket, thereby cooling the inner space, and
   in a production state: the first lower end valve is opened, thereby allowing the product to flow into the inner space such that an air pocket is formed in the upper end of the inner space.

From the description above follows that, although various embodiments of the invention have been described and shown, the invention is not restricted thereto, but may also be embodied in other ways within the scope of the subject-matter defined in the following claims.

## Claims

1. A damper arrangement (100) for reducing pressure pulsations in a fluid line (102) filled with a liquid product, the damper arrangement (100) comprising
a vessel (104) having an inner chamber (116),
an upper end valve (132) that connects an upper end (106) of the inner chamber (116) to a gaseous media supply (135),
a lower end valve (128) that connects a lower end (108) of the inner chamber (116) to a liquid output (130),
a line connecting valve (126) that connects the lower end (108) of the inner chamber (116) to the fluid line (102),
the upper end valve (132), the lower end valve (128) and the line connecting valve (126) being operable to drain the inner chamber (116) from liquid product and form a pressure absorbing air pocket (109) inside the inner chamber (116), **wherein**
the vessel (104) comprises a jacket (110) that has a fluid inlet (112) and a fluid outlet (114) for passing, via a heating media valve (142), a heating media through the jacket (110) for sterilizing the inner chamber (116) of the vessel (104).

2. The damper arrangement (100) according to any preceding claim, comprising a temperature sensor (124) arranged to measure a temperature (T) of heating media leaving the jacket (110).

3. The damper arrangement (100) according to any preceding claim, comprising a control unit (136) that is communicatively connected to the upper end valve (132), the lower end valve (128), the line connecting valve (126) and the heating media valve (142), and configured to control:
the line connecting valve (126) to close,
the upper end valve (132) and the lower end valve (128) to open, such that liquid product is drained from the inner chamber (116) while gaseous media enters the inner chamber (116),
the upper end valve (132) and the lower end valve (128) to close,
the heating media valve (142) to open, for passing a heating media through the jacket (110) to sterilize the inner chamber (116) and gaseous media that has entered the inner chamber (116), and
the line connecting valve to open, for fluidly connecting the liquid product in the fluid line (102) with gaseous media in the inner chamber (116).

4. The damper arrangement (100) according to any preceding claim, wherein the jacket (110) is connected to a heating media source (S) for receiving the heating media via the heating media valve (142), and connected to a cooling media source (W) for receiving a cooling media via cooling media valve (146), such that the inner chamber (116) can be cooled by cooling media from the cooling media source (W).

5. The damper arrangement (100) according to claim 3 and 4, wherein the control unit (136) is communicatively connected to the cooling media valve (146), and configured to control, after opening the heating media valve (142),
the cooling media valve (146) to open, for passing a cooling media through the jacket (110) to cool the inner chamber (116).

6. The damper arrangement (100) according to any preceding claim, comprising a cleaning media valve (140) arranged for passing a cleaning media through the inner chamber (116).

7. The damper arrangement (100) according to any claims 3 and 6, wherein the control unit (136) is communicatively connected to the cleaning media valve (140), and configured to control, before opening the heating media valve (142),
the cleaning media valve (146) to open, for passing a cleaning media through the inner chamber (116) to clean the inner chamber (116) from liquid product.

8. The damper arrangement (100) according to any preceding claim, wherein the fluid line (102) is connected to the inlet (112) of the jacket (110), such that the heating media valve (142') can be controlled to pass a heating media from the fluid line (102) through the jacket (110).

9. The damper arrangement (100) according to any preceding claim, wherein the outlet (114) of the jacket (110) is connected to the fluid line (102), such that the heating can be returned to the fluid line (102) from the jacket (110).

10. The damper arrangement (100) according to any preceding claim, comprising a sensor (148) connected to the inner chamber (116) and arranged to generate a signal indicative of a level of liquid (150) that is present inside the chamber (116).

11. A homogenizer arrangement (204) comprising
a damper arrangement (100) according to any preceding claim, and
a homogenizer (200) configured to receive liquid product from the fluid line (102), wherein the homogenizer (200) is arranged to operate at a pressure of at least 200 bar for homogenizing the liquid product, while simultaneously controlling the upper end valve (132), the lower end valve (128) and the line connecting valve (126) such that liquid product is drained from the inner chamber (116) while gaseous media enters the inner chamber (116).

12. A method (300) of operating a damper arrangement (100) according to any one of claims 1 to 10, the method comprising
closing (302) the line connecting valve (126),
opening (304) the upper end valve (132) and the lower end valve (128), such that liquid product is drained from the inner chamber (116) while gaseous media enters the inner chamber (116),
closing (306) the upper end valve (132) and the lower end valve (128),
opening (308) the heating media valve (142), for passing a heating media through the jacket (110) to sterilize the inner chamber (116) and gaseous media that has entered the inner chamber (116), and
opening (310) the line connecting valve, for fluidly connecting the liquid product in the fluid line (102) with gaseous media in the inner chamber (116).
